# EUROPEAN PATENT SPECIFICATION

(11) **EP 3 386 148 B1**
(45) Date of publication and mention of the grant of the patent: **07.10.2020**
(21) Application number: 16869701.9
(22) Date of filing: 01.08.2016
(51) Int. Cl.: H04L 12/10, H02J 1/10

(54) **POWER SUPPLY CONTROL METHOD AND APPARATUS FOR COMMUNICATION NETWORK**
VERFAHREN UND VORRICHTUNG ZUR STEUERUNG DER STROMVERSORGUNG EINES KOMMUNIKATIONSNETZES
PROCÉDÉ DE COMMANDE D'ALIMENTATION ÉLECTRIQUE ET APPAREIL POUR UN RÉSEAU DE COMMUNICATION

(30) Priority: 30.11.2015 CN 201510863426
(43) Date of publication of application: 10.10.2018
(73) Proprietor: ZTE Corporation, Shenzhen, Guangdong 518057 (CN)
(72) Inventor: GUO, Qiang, Shenzhen Guangdong 518057 (CN)
(74) Representative: Bandpay & Greuter
(86) International application number: PCT/CN2016/092715
(87) International publication number: WO 2017/092390

(56) References cited:
- WO-A1-2015/033119
- WO-A1-2015/117476
- CN-A- 101 594 236
- CN-A- 103 107 891
- CN-A- 104 460 792
- US-A1- 2006 171 399
- US-A1- 2014 191 742
- US-A1- 2015 333 514

## Description

### TECHNICAL FIELD

Embodiments of the present disclosure relate to the communication technical field, and particularly to a power supplying control method and device.

### BACKGROUND

With the continuous development of communication network technologies, while using communication networks to transmit information flows, it is also possible to use the communication networks to propagate current and supply power to electrical equipment in the networks. For example, Ethernet may be used to power electronic devices such as Internet telephones, wireless access points, surveillance cameras, and terminal switching equipment in the Ethernet. As another example, telephone networks may be used to power telephones, ever-lasting lamps, environmental monitoring equipment, and the son on. The use of a communication network to supply power to electronic devices can solve the problem of difficulty in power obtaining (or electricity acquisition), increase the flexibility of use of devices, reduce the installation complexity and the cost of the devices themselves, and can also use the communication network to remotely control the power supplying or power off of the devices.

For example, with the advent of new technologies such as VDSL2 and G. fast, by expanding the spectrum, it is possible to provide an asymmetric transmission with a net speed of up to 500 Mbps and 1 Gbps on a copper twisted pair, which is accompanied by higher demand for electricity, that is, electrical loads need more power. In order to provide electricity with greater power for communication networks, two or more power supplying equipment are usually used to power (or provide electricity to) the same electrical load. When an interface controller receives power supplying from the power supplying equipment, the interface controller first passes the electricity to a current balance module (current equalization module) to make that the current in the two or more power supplying lines is the same. Then, the electricity is passed to a direct current-direct current converter (DC-DC converter) and then to the electric load. Controlling the power supplying status of each power supplying line becomes a trend and potential demand.

In related art, control methods such as an average current method, a peak current method, a master-slave setting method and the like are used to perform the current equalization control for each power supplying line to realize the natural equalization of power supplying for each path. In the related arts, on and off of each power supplying line can be controlled to realize powering-up (or powering-on) or powering-off of each power supplying line. However, the configurability and flexibility of the power supplying methods in the above-mentioned related arts are poor. In this way, the DC-DC voltage converter cannot be in an optimal working state, the conversion efficiency of the system is low, and the loss of electricity energy is high.

In related arts, there is no effective solution to the problem of poor flexibility in power supplying caused by current equalization control for individual power supplying lines.

Patent document WO2015/117476 discloses a communication network power supply, and in particular, a power supply control apparatus and method for a communication network.

Patent document US 2014/191742 relates to a voltage regulator and a control circuit and a control method of a voltage regulator; particularly, it relates to such voltage regulator and control circuit and control method capable of adjusting the output voltage to reduce the power consumption while maintaining a stable supply of output current.

Patent document US 2015/333514 relates to a cable drop compensation circuit, in particular, relates to a DC output power circuit using the cable drop compensation circuit. However, the above-mentioned issues still remain unsolved.

### SUMMARY

The present invention relates to a power supplying control method and device for a communication network according to the annexed claims, so as to at least to solve the problem of poor flexibility in power supplying caused by current equalization control for individual power supplying lines in related arts.

The following is a summary of the embodiments of present disclosure which is not intended to limit the scope of the invention as defined by claims.

According to an aspect of embodiments of the present disclosure, there is provided a power supplying control method for a communication network as defined by the appended claim 1.

Optionally, adjusting, by a voltage regulator circuit, the at least one output voltage of the at least one power supplying circuit according to a predetermined ratio according to the power supplying data and the on-going power consumption data, includes at least one of: determining whether an electrical power supplied by the at least one power supplying circuit satisfies an electrical power consumed by the electrical load; and if the electrical power supplied by the at least one power supplying circuit cannot satisfy the electrical power consumed by the electrical load, adjusting the at least one output voltage of the at least one power supplying circuit according to the predetermined ratio by the voltage regulator circuit; or,
according to an indication of a system control signal sent from a power supplying system of the communication network, adjusting the at least one output voltage of the at least one power supplying circuit according to the predetermined ratio by the voltage regulator circuit.

Optionally, before obtaining power supplying data of at least one power supplying circuit in a communication network and on-going power consumption data of an electrical load in the communication network, the method further includes:
controlling, by an interface control circuit, the communication network to be connected to a power supplying device corresponding to the at least one power supplying circuit, wherein each connected power supplying device corresponds to one power supplying circuit for powering the electrical load.

Optionally, obtaining power supplying data of at least one power supplying circuit in a communication network and on-going power consumption data of an electrical load in the communication network includes:
obtaining a current power consumption voltage of the electrical load which is monitored in the communication network; and
obtaining an average output voltage of at least one current output voltage of the at least one power supplying circuit.

Optionally, determining whether an electrical power supplied by the at least one power supplying circuit satisfies an electrical power consumed by the electrical load, includes:
determining whether an absolute value of a difference between an average output voltage of the at least one power supplying circuit and the on-going power consumption voltage value of the electrical load is smaller than or equal to a preset threshold;
if it is determined that the electrical power supplied by the at least one power supplying circuit cannot satisfy the electrical power consumed by the electrical load, adjusting the at least one output voltage of the at least one power supplying circuit according to the predetermined ratio by the voltage regulator circuit, includes:
   if it is determined that the absolute value of the difference between the average output voltage of the at least one power supplying circuit and the on-going power consumption voltage value of the electrical load is greater than the preset threshold, adjusting the at least one output voltage of the at least one power supplying circuit according to the predetermined ratio by the voltage regulator circuit.

Optionally, adjusting the at least one output voltage of the at least one power supplying circuit according to the predetermined ratio by the voltage regulator circuit, includes:
if it is determined that the absolute value of the difference between the average output voltage of the at least one power supplying circuit and the on-going power consumption voltage value of the electrical load is greater than the preset threshold and the average output voltage of at least one power supplying circuit is greater than the on-going power consumption voltage of the electrical load, controlling corresponding voltage regulator circuit for each of the at least one power supplying circuit to adjust the output voltage of the at least one power supplying circuit to be a first target output voltage according to a first ratio, wherein the first target output voltage is smaller than the average output voltage; and
if it is determined that the absolute value of the difference between the average output voltage of the at least one power supplying circuit and the on-going power consumption voltage value of the electrical load is greater than the preset threshold and the average output voltage of at least one power supplying circuit is smaller than the on-going power consumption voltage of the electrical load, controlling corresponding voltage regulator circuit for each of the at least one power supplying circuit to adjust the output voltage of the at least one power supplying circuit to be a second target output voltage according to a second ratio, wherein the second target output voltage is greater than the average output voltage.

According to another aspect of embodiments of the present disclosure, there is provided a power supplying control device for a communication network as defined by the appended claim 7.

Optionally, the adjustment module includes at least one of:
a determination unit configured to determine whether an electrical power supplied by the at least one power supplying circuit satisfies an electrical power consumed by the electrical load;
a first adjustment unit configured to, if it is determined that the electrical power supplied by the at least one power supplying circuit cannot satisfy the electrical power consumed by the electrical load, adjust the at least one output voltage of the at least one power supplying circuit according to the predetermined ratio by the voltage regulator circuit; or
a second adjustment unit configured to, according to an indication of a system control signal sent from a power supplying system of the communication network, adjust the at least one output voltage of the at least one power supplying circuit according to the predetermined ratio by the voltage regulator circuit.

Optionally, the device further includes:
a control module configured to, before the power supplying data of at least one power supplying circuit in a communication network and on-going power consumption data of an electrical load in the communication network are obtained, control by an interface control circuit the communication network to be connected to a power supplying device corresponding to the at least one power supplying circuit, wherein each connected power supplying device corresponds to one power supplying circuit for powering the electrical load.

Optionally, the obtaining module includes:
a first obtaining unit configured to obtain an on-going power consumption voltage of the electrical load which is monitored in the communication network; and
a second obtaining unit configured to obtain an average output voltage of at least one current output voltage of the at least one power supplying circuit.

Optionally, the determination unit is further configured to determine whether an absolute value of a difference between an average output voltage of the at least one power supplying circuit and the on-going power consumption voltage value of the electrical load is smaller than or equal to a preset threshold;
wherein the first adjustment unit is further configured to, if it is determined that the absolute value of the difference between the average output voltage of the at least one power supplying circuit and the on-going power consumption voltage value of the electrical load is greater than the preset threshold, adjust the at least one output voltage of the at least one power supplying circuit according to the predetermined ratio by the voltage regulator circuit.

Optionally, the first adjustment unit includes:
a first process subunit configured to, if it is determined that the absolute value of the difference between the average output voltage of the at least one power supplying circuit and the current power consumption voltage value of the electrical load is greater than the preset threshold and the average output voltage of at least one power supplying circuit is greater than the on-going power consumption voltage of the electrical load, control corresponding voltage regulator circuit for each of the at least one power supplying circuit to adjust the output voltage of the at least one power supplying circuit to be a first target output voltage according to a first ratio, wherein the first target output voltage is smaller than the average output voltage; and
a second process subunit configured to, if it is determined that the absolute value of the difference between the average output voltage of the at least one power supplying circuit and the current power consumption voltage value of the electrical load is greater than the preset threshold and the average output voltage of at least one power supplying circuit is smaller than the current power consumption voltage of the electrical load, control corresponding voltage regulator circuit for each of the at least one power supplying circuit to adjust the output voltage of the at least one power supplying circuit to be a second target output voltage according to a second ratio, wherein the second target output voltage is greater than the average output voltage.

According to another aspect of embodiments of the present disclosure, as defined by the appended claim 13 there is provided with program product having stored instructions that, when executed by one or more processors of an apparatus, causes the apparatus to perform the above method.

In embodiments of the present disclosure, power supplying data of at least one power supplying circuit in a communication network and on-going power consumption data of an electrical load in the communication network are obtained, and wherein the power supplying data includes at least an output voltage of the at least one power supplying circuit. According to the power supplying data and the on-going power consumption data, the at least one output voltage of the at least one power supplying circuit is adjusted by a voltage regulator circuit according to a predetermined ratio. In other words, in the embodiments of the present disclosure, the power supplying ratio and volume of each power supplying line are dynamically adjusted according to whether the electrical energy supplied by the power supplying circuit satisfies the electrical energy consumed by the electrical load. Thus, the present disclosure can solve problem of poor flexibility in power supplying caused by current equalization control for individual power supplying lines in related arts, thereby increasing the flexibility in power supplying of individual power supplying lines (or circuits).

After reading and understanding the drawings and detailed description, other aspects can be understood.

### BRIEF DESCRIPTION OF THE DRAWINGS

The drawings described herein are provided to facilitate a further understanding of the present application, and constitute a part of the present application. The exemplary embodiments of the present application and descriptions thereof are used to explain the present application and are not intended to unduly limit the present application.
Fig. 1 is a flow chart of a power supplying control method for a communication network according to an embodiment of the present disclosure.
Fig. 2 is a block diagram of a power supplying control device for a communication network according to an embodiment of the present disclosure.
Fig. 3 is a schematic diagram showing connections between modules of a control device for multi-line power supplying for a communication network according to an embodiment of the present disclosure.
Fig. 4 is a flow chart showing a power supplying control method for a communication network according to an embodiment of the present disclosure.
Fig. 5 is a block diagram showing a power supplying control device for a communication network according to an embodiment of the present disclosure.
Fig. 6 is a block diagram showing a power supplying control device for a communication network according to an embodiment of the present disclosure.
Fig. 7 is a block diagram showing a power supplying control device for a communication network according to an embodiment of the present disclosure.
Fig. 8 is a block diagram showing a power supplying control device for a communication network according to an embodiment of the present disclosure.
Fig. 9 is a block diagram showing a power supplying control device for a communication network according to an embodiment of the present disclosure.
Fig. 10 is a schematic diagram showing a control device for multi-line power supplying for a communication network according to an embodiment of the present disclosure.
Fig. 11 is a schematic diagram of a power supplying control device for a communication network according to an embodiment of the present disclosure.
Fig. 12 is a schematic diagram of a monitoring module of a power supplying control device for a communication network according to an embodiment of the present disclosure.
Fig. 13 is a schematic diagram of a power supplying control module of a power supplying control device for a communication network according to an embodiment of the present disclosure.
Fig. 14 is a schematic diagram of a voltage-adjustable DC-DC module of a power supplying control device for a communication network according to an embodiment of the present disclosure.
Fig. 15 is a schematic diagram of a power supplying control device for a communication network in an application scenario according to an embodiment of the present disclosure.
Fig. 16 is a schematic diagram of a power supplying control device for a communication network in another application scenario according to an embodiment of the present disclosure.

### DETAILED DESCRIPTION

Hereinafter, the present application will be described in detail with reference to the accompanying drawings and in conjunction with embodiments. It should be noted that the embodiments in the present application and the features in the embodiments can be combined with each other without conflict.

It should be noted that the terms "first", "second", and the like in the description and claims and the above drawings of the present invention are used to distinguish similar objects and do not have to be used to describe a specific sequence or order.

### Embodiment 1

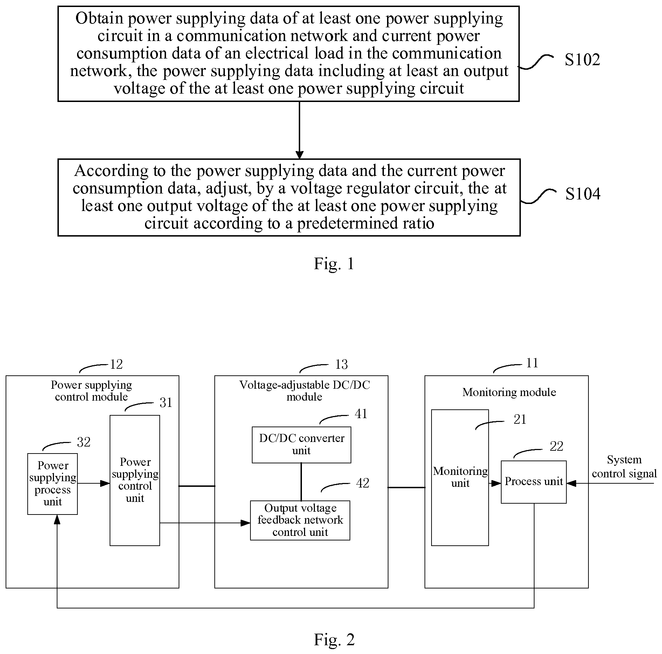

In this embodiment, a power supplying control method for a communication network is provided. Fig. 1 is a flow chart of a power supplying control method for a communication network according to an embodiment of the present disclosure. As shown in Fig. 1, the method includes the following steps.

In step S102, power supplying data of at least one power supplying circuit in a communication network and current power consumption data (i.e., the power consumption at present) of an electrical load in the communication network are obtained. The power supplying data includes at least an output voltage of the at least one power supplying circuit.

In step S104, according to the power supplying data and the current power consumption data, the at least one output voltage of the at least one power supplying circuit is adjusted by a voltage regulator circuit according to a predetermined ratio.

Optionally, in this embodiment, the application scenario of the power supplying control method for a communication network includes but is not limited to: power supplying control over Ethernet, and power supplying control over a telephone network. In these application scenarios, according to the power supplying data and the current power consumption data, the at least one output voltage of the at least one power supplying circuit is adjusted by a voltage regulator circuit according to a predetermined ratio, so that the power supplying ratio and volume of each power supplying line are dynamically adjusted. This is unlike the related arts in which control methods such as an average current method, a peak current method, a master-slave setting method and the like are used to perform the current equalization control for each power supplying line to realize the natural equalization of power supplying for each path, or on and off of each power supplying circuit (or line) is controlled, which results in poor configurability and flexibility of the power supplying.

The embodiment can solve the problem of poor flexibility in power supplying caused by current equalization control for each power supplying line in related arts, thereby improving flexibility in power supplying of individual power supplying lines.

Optionally, in the embodiment, the power supplying control method for a communication network includes but is not limited to: adjusting the power supplying circuit(s) according to the requirement of the electricity energy consumed by the electrical load; adjusting the output voltage(s) of the power supplying circuit(s) according to the indication of a system control signal sent from a power supplying system of the communication network; and adjusting the power supplying circuit(s) according to the properties of the power supplying circuit(s). Adjusting the power supplying circuit(s) according to the properties of the power supplying circuit(s) includes but is not limited to: when a power supplying line (or circuit) is powered down and emergency power supplying is performed by using a standby power supply (or power source), the power supplying ratio of the line can be lowered, so as to meet different requirements and adapt to broad application scenarios. Optionally, in the embodiment, the voltage regulator circuit includes but is not limited to a DC-DC voltage converter which is used to regulate the output voltage(s) of the power supplying circuit(s).

Optionally, in the embodiment, if it is determined that the electrical power supplied by the at least one power supplying circuit cannot satisfy the electrical power consumed by the electrical load, adjusting the at least one output voltage of the at least one power supplying circuit according to the predetermined ratio by the voltage regulator circuit, may include but is not limited to: if it is determined that the electrical power supplied by the at least one power supplying circuit cannot satisfy the electrical power consumed by the electrical load, adjusting the at least one output voltage of the at least one power supplying circuit according to the predetermined ratio by the voltage regulator circuit, so that the output voltage is increased to match the electrical power consumption of the electrical load; if it is determined that the electrical power supplied by the at least one power supplying circuit cannot satisfy the electrical power consumed by the electrical load, adjusting the at least one output voltage of the at least one power supplying circuit according to the predetermined ratio by the voltage regulator circuit, so that the output voltage is decreased to match the electrical power consumption of the electrical load. Embodiments of the present disclosure will be described below with reference to specific examples.

The power supplying control method for a communication network in the above embodiment may be applied to the power supplying control device for a communication network as shown in Fig. 2. Fig. 2 is a block diagram of a power supplying control device for a communication network according to an embodiment of the present invention. As shown in Fig. 2, the device includes a monitoring unit 21 and a process unit 22 in a monitoring module 11, a power supplying process unit 32 and a power supplying control unit 31 in a power supplying module 12, and an output voltage feedback network control unit 42 and a DC/DC converter unit 41 in a voltage-adjustable DC/DC module 13. The device can be used to realize control of power supplying in the communication network. Specifically, the monitoring module 11 obtains power supplying data of at least one power supplying circuit in a communication network and current power consumption data of an electrical load in the communication network (the power supplying data includes at least an output voltage of the at least one power supplying circuit), and determines whether an electrical power supplied by the at least one power supplying circuit satisfies an electrical power consumed by the electrical load according to the power supplying data and the current power consumption data. If it is determined that the electrical power supplied by the at least one power supplying circuit cannot satisfy the electrical power consumed by the electrical load, the at least one output voltage of the at least one power supplying circuit is adjusted according to the predetermined ratio by the joint function of the power supplying control module 12 and the voltage-adjustable DC/DC module 13.

In the embodiment, the circuit data of each power supplying circuit is first detected, and the circuit data of each power supplying circuit is calculated and compared to determine (or analyze) the output circuit data which each power supplying circuit should have. Then, the output voltage of each power supplying circuit is adjusted according to the output circuit data which each power supplying circuit should have. Then, the output voltages of all the power supplying circuits are connected in parallel to power the electrical load at a later stage. In this way, the embodiment can make the power supplying of individual power supplying circuits controllable, and thereby adjust the power supplying ratios and volumes of individual power supplying circuits.

In an optional implementation, adjusting, by a voltage regulator circuit, the at least one output voltage of the at least one power supplying circuit according to a predetermined ratio according to the power supplying data and the current power consumption data, includes at least one of the following steps:
In step S11, whether an electrical power supplied by the at least one power supplying circuit satisfies (or matches) an electrical power consumed by the electrical load is determined (in other words, whether an electrical power supplied by the at least one power supplying circuit satisfies an electrical power consumption need of the electrical load is determined); and if it is determined that the electrical power supplied by the at least one power supplying circuit cannot satisfy the electrical power consumed by the electrical load, the at least one output voltage of the at least one power supplying circuit is adjusted according to the predetermined ratio by the voltage regulator circuit; or,
In step S12, according to an indication of a system control signal sent from a power supplying system of the communication network, the at least one output voltage of the at least one power supplying circuit is adjusted according to the predetermined ratio by the voltage regulator circuit.

Optionally, in the embodiment, the output voltage of the power supplying circuit may be adjusted by the voltage regulator circuit based on a predetermined ratio according to the judgment result regarding the electrical power supplied by the power supplying circuit and the electrical power consumed by the electrical load. Alternatively, the output voltage of the power supplying circuit may be adjusted by the voltage regulator circuit based on a predetermined ratio according to an indication of a system control signal sent from a power supplying system of the communication network. That is, control and adjustments can be performed by the system background or the host computer, so that the ratio and volume of power supplied by each power supplying line can be arbitrarily adjusted.

By the above steps, according to the judgment result regarding the electrical power supplied by the power supplying circuit(s) and the electrical power consumed by the electrical load, or according to the indication of the system control signal issued by the power supplying system of the communication network, the output voltage(s) of the power supplying circuit(s) can be adjusted by the voltage regulator circuit according to a predetermined ratio. Thus, embodiments of the present disclosure can solve the problem of poor flexibility in power supplying caused by current equalization control for individual power supplying lines.

In an optional implementation, before obtaining power supplying data of at least one power supplying circuit in a communication network and current power consumption data of an electrical load in the communication network, the method further includes the following steps:
In step S21, the communication network is controlled by an interface control circuit to be connected to a power supplying device corresponding to the at least one power supplying circuit. Each connected power supplying device corresponds to one power supplying circuit for powering the electrical load.

Optionally, in the embodiment, the interface control circuit includes, but is not limited to the following implementations: a plurality of power supplying circuits use one interface control circuit to perform power supplying control; each of the plurality of power supplying circuits uses an interface control circuit to perform power supplying control.

It should be noted that in the embodiment, the interface control circuit controls the on and off of the current flow between the communication network connected to the power supplying device corresponding to the power supplying circuit.

The embodiment will be explained below in conjunction with specific examples.

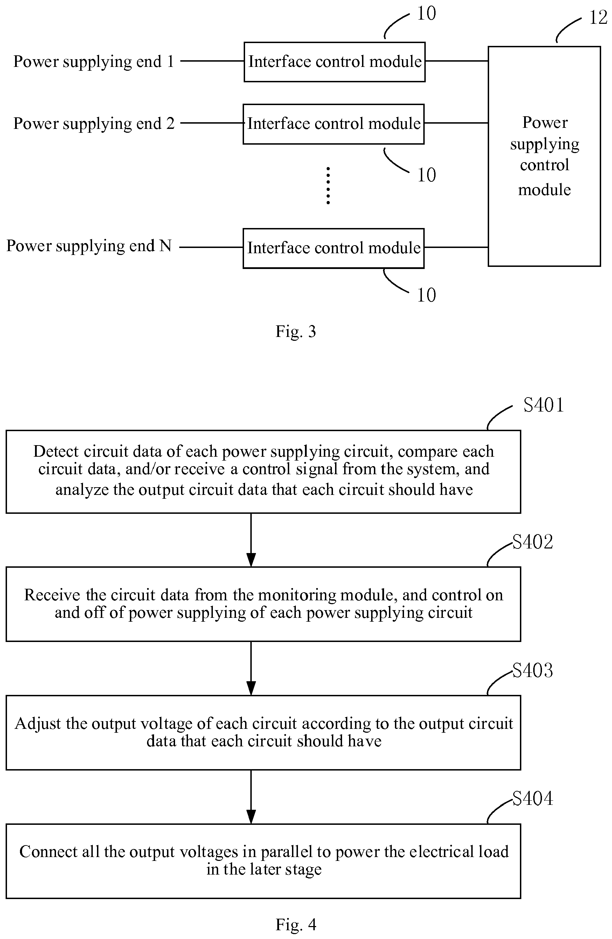

Fig. 3 is a schematic diagram showing connections between modules of a control device for multi-line power supplying for a communication network according to an embodiment of the present disclosure. The connection relationship of the interface control circuit in the embodiment is described below with reference to Fig. 3. The following descriptions are made with the interface control modules 10 in Fig. 3 as examples.

As shown in Fig. 3, the power supplying control device of the communication network includes N interface control modules 10, each of the interface control modules 10 is configured to receive a direct current from a power supplying end, and the input end of each interface control module 10 is connected to a power supplying end, and the output end of each interface control module 10 is connected to one input end of the power supplying control module 12.

It should be noted that, in the above example of the embodiment, each of the plurality of power supplying circuits uses one interface control circuit to perform power supplying control.

Through the above steps, the interface control circuits are used to control the communication network to be connected to the power supplying device corresponding to the power supplying circuit, so as to realize dynamic adjustment of the current input to the load.

In an optional implementation, obtaining power supplying data of at least one power supplying circuit in a communication network and current power consumption data of an electrical load in the communication network includes the following steps:
In step S31, a current power consumption voltage of the electrical load which is monitored in the communication network is obtained.

In step S32, an average output voltage of at least one current output voltage of the at least one power supplying circuit is obtained.

Optionally, in the embodiment, by obtaining the current power consumption voltage of the electrical load which is monitored in the communication network and the average output voltage of at least one current output voltage of the at least one power supplying circuit, it is possible to track dynamic load changes of each power supplying circuit in real time, and control ratio and volume of electrical power supplied by each circuit according to the output circuit data of each circuit. In this way, the flexibility of power supplying is effectively improved, the effective load of a single DC-DC module can be improved, the conversion efficiency of the DC-DC module can be improved, the system heat loss can be reduced, and the dynamic control of the power supplying can be implemented to adapt to a wider range of application scenarios.

In an optional implementation, determining whether an electrical power supplied by the at least one power supplying circuit satisfies an electrical power consumed by the electrical load includes the following steps:
In step S41, whether an absolute value of a difference between an average output voltage of the at least one power supplying circuit and the current power consumption voltage value of the electrical load is smaller than or equal to a preset threshold is determined.

If it is determined that the electrical power supplied by the at least one power supplying circuit cannot satisfy the electrical power consumed by the electrical load, adjusting the at least one output voltage of the at least one power supplying circuit according to the predetermined ratio by the voltage regulator circuit includes the following steps:
In step S42, if it is determined that the absolute value of the difference between the average output voltage of the at least one power supplying circuit and the current power consumption voltage value of the electrical load is greater than the preset threshold, the at least one output voltage of the at least one power supplying circuit is adjusted according to the predetermined ratio by the voltage regulator circuit.

For example, in the embodiment, if it is determined that the absolute value of the difference between the average output voltage of the at least one power supplying circuit and the current power consumption voltage value of the electrical load is greater than 10, the voltage regulator circuit increases or decreases the output voltage of each power supplying circuit by 5%, so that the output voltages of the power supplying circuits match the electrical power (or electrical energy) consumed by the load.

Optionally, in the embodiment, according to the comparison result between the absolute value of the difference between the average output voltage of the power supplying circuit(s) and the current power consumption voltage of the electrical load and the predetermined threshold, the output voltage(s) of the power supplying circuit(s) is(are) adjusted according to the predetermined ratio by the voltage regulator circuit. In this way, the embodiment can solve the problem in related arts that current equalization control is performed on each power supplying circuit to realize natural equalization of power supplying of individual circuits, which results in poor configurability and flexibility of power supplying. Thus, the embodiment can improve the flexibility of power supplying of individual power supplying circuits.

In an optional embodiment, adjusting the at least one output voltage of the at least one power supplying circuit according to the predetermined ratio by the voltage regulator circuit includes the following steps:
In step S51, if it is determined that the absolute value of the difference between the average output voltage of the at least one power supplying circuit and the current power consumption voltage value of the electrical load is greater than the preset threshold and the average output voltage of at least one power supplying circuit is greater than the current power consumption voltage of the electrical load, controlling corresponding voltage regulator circuit for each of the at least one power supplying circuit to adjust the output voltage of the at least one power supplying circuit to be a first target output voltage according to a first ratio. The first target output voltage is smaller than the average output voltage.

In step S52, if it is determined that the absolute value of the difference between the average output voltage of the at least one power supplying circuit and the current power consumption voltage value of the electrical load is greater than the preset threshold and the average output voltage of at least one power supplying circuit is smaller than the current power consumption voltage of the electrical load, controlling corresponding voltage regulator circuit for each of the at least one power supplying circuit to adjust the output voltage of the at least one power supplying circuit to be a second target output voltage according to a second ratio. The second target output voltage is greater than the average output voltage.

Through the above steps, the output voltage(s) of the power supplying circuit(s) is(are) dynamically adjusted. In this way, the embodiment can solve the problem in related arts that current equalization control is performed on each power supplying circuit to realize natural equalization of power supplying of individual circuits, which results in poor configurability and flexibility of power supplying. Thus, the embodiment can improve the flexibility of power supplying of individual power supplying circuits.

The embodiment will be explained below in conjunction with specific examples.

Fig. 4 is a flow chart showing a power supplying control method for a communication network according to an embodiment of the present disclosure. The method includes the following steps.

In step S401, circuit data of each power supplying circuit is detected, each circuit data is compared, and/or a control signal from the system is received, and the output circuit data that each circuit should have is determined.

In step S402 (optional), the circuit data from the monitoring module is received, and on and off of power supplying of each power supplying circuit is controlled.

In step S403, the output voltage of each circuit is adjusted according to the output circuit data that each circuit should have.

In step S404, after all the output voltages are connected in parallel, the output voltages are supplied to the electrical load at a later stage.

The monitoring module first detects the circuit data of each power supplying circuit, compares the detected circuit data of individual circuits, and/or receives the control signal from the system, and analyzes the output voltage that each circuit should have. Then, the output circuit data that each circuit should have is transmitted to the power supplying control module. Afterwards, the power supplying control module processes the circuit data from the monitoring module, and controls the on and off of power supplying of each circuit. At the same time, each voltage-adjustable DC-DC module adjusts the output voltage of each circuit according to the output circuit data that each circuit should have. Finally, after all the output voltages of the circuits are connected in parallel, the output voltages are supplied to the electrical load at a later stage.

Optionally, after comparing the circuit data of each circuit and/or receiving the control signal from the system and analyzing the output circuit data that each circuit should have, the method may further include: performing operations and processing on the circuit data, determining the output voltage of the voltage-adjustable DC-DC module, and controlling the on and off of the DC-DC conversion function.

Optionally, before step S401, the method may further include: receiving direct currents from the N power supplying ends, N being an integer greater than or equal to 2.

According to the output data from the monitoring module, the power supplying control signal is transmitted to the power supplying control unit to control the output voltage of the voltage-adjustable DC-DC module, so as to control the proportion and volume (or amount) of the electrical power supplied by the circuits. In this way, the flexibility of power supplying is improved, the dynamic load changes of each power supplying circuit can be tracked in real time, the effective load of a single DC-DC module can be improved, the conversion efficiency of the DC-DC module can be improved, the system heat loss can be reduced, and the technical solution provided by the embodiment can be adapt to a relatively wide range of application scenarios.

Through the description of the above embodiments, those skilled in the art can clearly understand that the methods according to the above embodiments can be implemented by means of software plus a necessary general hardware platform. Of course, the hardware can also be used, but in many cases, the former is better implementation. Based on such understanding, the essence or the part technical solutions of the present disclosure that contributes to the prior art can be embodied in the form of a software product. The computer software product is stored in a storage medium (such as ROM/RAM, magnetic disk, optical disc), including instructions for enabling a terminal device (which may be a mobile phone, a computer, a server, or a network device, etc.) to perform the methods described in the various embodiments of the present disclosure.

### Embodiment 2

An embodiment of the present disclosure also provides a power supplying control device for a communication network. The device is used to implement the above embodiments and exemplary implementations, which have been described above and will not be described again. As used below, the term "module" may be a combination of software and/or hardware for performing a predetermined function. Although the device described in the following embodiments are preferably implemented in software, the implementation of hardware or a combination of software and hardware is also possible and can be conceived.

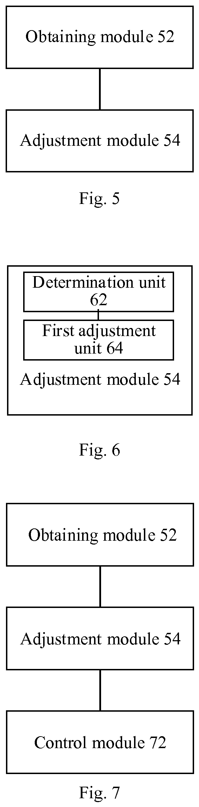

Fig. 5 is a block diagram showing a power supplying control device for a communication network according to an embodiment of the present disclosure. As shown in Fig. 5, the device may include an obtaining module 52 and an adjustment module 54.
1) The obtaining module 52 is configured to obtain power supplying data of at least one power supplying circuit in a communication network and current power consumption data of an electrical load in the communication network. The power supplying data includes at least an output voltage of the at least one power supplying circuit.
2) The adjustment module 54 is configured to, according to the power supplying data and the current power consumption data, adjust, by a voltage regulator circuit, the at least one output voltage of the at least one power supplying circuit according to a predetermined ratio.

Optionally, in this embodiment, the application scenario of the power supplying control method for a communication network includes but is not limited to: power supplying control over Ethernet, and power supplying control over a telephone network. In these application scenarios, according to the power supplying data and the current power consumption data, the at least one output voltage of the at least one power supplying circuit is adjusted by a voltage regulator circuit according to a predetermined ratio, so that the power supplying ratio and volume of each power supplying line are dynamically adjusted. This is unlike the related arts in which control methods such as an average current method, a peak current method, a master-slave setting method and the like are used to perform the current equalization control for each power supplying line to realize the natural equalization of power supplying for each path, or on and off of each power supplying circuit (or line) is controlled, which results in poor configurability and flexibility of the power supplying. The embodiment can solve the problem in related arts that current equalization control is performed on each power supplying circuit to realize natural equalization of power supplying of individual circuits, which results in poor configurability and flexibility of power supplying. Thus, the embodiment can improve the flexibility of power supplying of individual power supplying circuits.

Optionally, in the embodiment, the power supplying control method for a communication network includes but is not limited to: adjusting the power supplying circuit(s) according to the requirement of the electricity energy consumed by the electrical load; adjusting the output voltage(s) of the power supplying circuit(s) according to the indication of a system control signal sent from a power supplying system of the communication network; and adjusting the power supplying circuit(s) according to the properties of the power supplying circuit(s). Adjusting the power supplying circuit(s) according to the properties of the power supplying circuit(s) includes but is not limited to: when a power supplying line (or circuit) is powered down and emergency power supplying is performed by using a standby power supply (or power source), the power supplying ratio of the line can be lowered, so as to meet different requirements and adapt to broad application scenarios.

Optionally, in the embodiment, the voltage regulator circuit includes but is not limited to a DC-DC voltage converter which is used to regulate the output voltage(s) of the power supplying circuit(s).

Optionally, in the embodiment, if it is determined that the electrical power supplied by the at least one power supplying circuit cannot satisfy the electrical power consumed by the electrical load, adjusting the at least one output voltage of the at least one power supplying circuit according to the predetermined ratio by the voltage regulator circuit, may include but is not limited to: if it is determined that the electrical power supplied by the at least one power supplying circuit cannot satisfy the electrical power consumed by the electrical load, adjusting the at least one output voltage of the at least one power supplying circuit according to the predetermined ratio by the voltage regulator circuit, so that the output voltage is increased to match the electrical power consumption of the electrical load; if it is determined that the electrical power supplied by the at least one power supplying circuit cannot satisfy the electrical power consumed by the electrical load, adjusting the at least one output voltage of the at least one power supplying circuit according to the predetermined ratio by the voltage regulator circuit, so that the output voltage is decreased to match the electrical power consumption of the electrical load.

Embodiments of the present disclosure will be described below with reference to specific examples.

The power supplying control method for a communication network in the above embodiment may be applied to the power supplying control device for a communication network as shown in Fig. 2. Fig. 2 is a block diagram of a power supplying control device for a communication network according to an embodiment of the present invention.

As shown in Fig. 2, the device includes a monitoring unit 21 and a process unit 22 in a monitoring module 11, a power supplying process unit 32 and a power supplying control unit 31 in a power supplying module 12, and an output voltage feedback network control unit 42 and a DC/DC converter unit 41 in a voltage-adjustable DC/DC module 13. The device can be used to realize control of power supplying in the communication network.

Specifically, the monitoring module 11 obtains power supplying data of at least one power supplying circuit in a communication network and current power consumption data of an electrical load in the communication network (the power supplying data includes at least an output voltage of the at least one power supplying circuit), and determines whether an electrical power supplied by the at least one power supplying circuit satisfies an electrical power consumed by the electrical load according to the power supplying data and the current power consumption data. If it is determined that the electrical power supplied by the at least one power supplying circuit cannot satisfy the electrical power consumed by the electrical load, the at least one output voltage of the at least one power supplying circuit is adjusted according to the predetermined ratio by the joint function of the power supplying control module 12 and the voltage-adjustable DC/DC module 13.

In the embodiment, the circuit data of each power supplying circuit is first detected, and the circuit data of each power supplying circuit is calculated and compared to determine (or analyze) the output circuit data which each power supplying circuit should have. Then, the output voltage of each power supplying circuit is adjusted according to the output circuit data which each power supplying circuit should have. Then, the output voltages of all the power supplying circuits are connected in parallel to power the electrical load at a later stage. In this way, the embodiment can make the power supplying of individual power supplying circuits controllable, and thereby adjust the power supplying ratios and volumes of individual power supplying circuits.

Fig. 6 is a block diagram showing a power supplying control device for a communication network according to an embodiment of the present disclosure. As shown in Fig. 6, the adjustment module 54 includes a determination unit 62 and a first adjustment unit 64. Alternatively, the determination unit 62 and the first adjustment unit 64 can be equivalently replaced with a second adjustment unit 66 (not shown in Fig. 6).

The determination unit 62 is configured to determine whether an electrical power supplied by the at least one power supplying circuit satisfies an electrical power consumed by the electrical load.

The first adjustment unit 64 is configured to, if it is determined that the electrical power supplied by the at least one power supplying circuit cannot satisfy the electrical power consumed by the electrical load, adjust the at least one output voltage of the at least one power supplying circuit according to the predetermined ratio by the voltage regulator circuit.

The second adjustment unit 66 is configured to, according to an indication of a system control signal sent from a power supplying system of the communication network, adjust the at least one output voltage of the at least one power supplying circuit according to the predetermined ratio by the voltage regulator circuit.

Optionally, in the embodiment, the output voltage of the power supplying circuit may be adjusted by the voltage regulator circuit based on a predetermined ratio according to the judgment result regarding the electrical power supplied by the power supplying circuit and the electrical power consumed by the electrical load. Alternatively, the output voltage of the power supplying circuit may be adjusted by the voltage regulator circuit based on a predetermined ratio according to an indication of a system control signal sent from a power supplying system of the communication network. That is, control and adjustments can be performed by the system background or the host computer, so that the ratio and volume of power supplied by each power supplying line can be arbitrarily adjusted.

By the above steps, according to the judgment result regarding the electrical power supplied by the power supplying circuit(s) and the electrical power consumed by the electrical load, or according to the indication of the system control signal issued by the power supplying system of the communication network, the output voltage(s) of the power supplying circuit(s) can be adjusted by the voltage regulator circuit according to a predetermined ratio. Thus, embodiments of the present disclosure can solve the problem of poor flexibility in power supplying caused by current equalization control for individual power supplying lines.

According to an optional implementation, Fig. 7 is a block diagram showing a power supplying control device for a communication network according to an embodiment of the present disclosure. As shown in Fig. 7, the device may further include a control module 72 in addition to all modules as shown in Fig. 5.

The control module 72 is configured to, before the power supplying data of at least one power supplying circuit in a communication network and current power consumption data of an electrical load in the communication network are obtained, control by an interface control circuit the communication network to be connected to a power supplying device corresponding to the at least one power supplying circuit. Each connected power supplying device corresponds to one power supplying circuit for powering the electrical load.

Optionally, in the embodiment, the interface control circuit includes, but is not limited to the following implementations: a plurality of power supplying circuits use one interface control circuit to perform power supplying control; each of the plurality of power supplying circuits uses an interface control circuit to perform power supplying control.

It should be noted that in the embodiment, the interface control circuit controls the on and off of the current flow between the communication network connected to the power supplying device corresponding to the power supplying circuit.

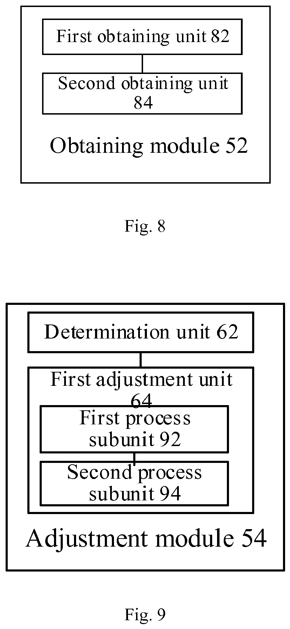

According to an optional implementation, Fig. 8 is a block diagram showing a power supplying control device for a communication network according to an embodiment of the present disclosure. As shown in Fig. 8, the obtaining module 52 in the device may include a first obtaining unit 82 and a second obtaining unit 84.
1) The first obtaining unit 82 is configured to obtain a current power consumption voltage of the electrical load which is monitored in the communication network.
2) The second obtaining unit 84 is configured to obtain an average output voltage of at least one current output voltage of the at least one power supplying circuit.

Optionally, in the embodiment, by obtaining the current power consumption voltage of the electrical load which is monitored in the communication network and the average output voltage of at least one current output voltage of the at least one power supplying circuit, it is possible to track dynamic load changes of each power supplying circuit in real time, and control ratio and volume of electrical power supplied by each circuit according to the output circuit data of each circuit. In this way, the flexibility of power supplying is effectively improved, the effective load of a single DC-DC module can be improved, the conversion efficiency of the DC-DC module can be improved, the system heat loss can be reduced, and the dynamic control of the power supplying can be implemented to adapt to a wider range of application scenarios.

Optionally, in the embodiment, the determination unit 62 is further configured to determine whether an absolute value of a difference between an average output voltage of the at least one power supplying circuit and the current power consumption voltage value of the electrical load is smaller than or equal to a preset threshold. The first adjustment unit 64 is further configured to, if it is determined that the absolute value of the difference between the average output voltage of the at least one power supplying circuit and the current power consumption voltage value of the electrical load is greater than the preset threshold, adjust the at least one output voltage of the at least one power supplying circuit according to the predetermined ratio by the voltage regulator circuit.

For example, in the embodiment, if it is determined that the absolute value of the difference between the average output voltage of the at least one power supplying circuit and the current power consumption voltage value of the electrical load is greater than 10, the voltage regulator circuit increases or decreases the output voltage of each power supplying circuit by 5%, so that the output voltages of the power supplying circuits match the electrical power (or electrical energy) consumed by the load.

Optionally, in the embodiment, according to the comparison result between the absolute value of the difference between the average output voltage of the power supplying circuit(s) and the current power consumption voltage of the electrical load and the predetermined threshold, the output voltage(s) of the power supplying circuit(s) is(are) adjusted according to the predetermined ratio by the voltage regulator circuit. In this way, the embodiment can solve the problem in related arts that current equalization control is performed on each power supplying circuit to realize natural equalization of power supplying of individual circuits, which results in poor configurability and flexibility of power supplying. Thus, the embodiment can improve the flexibility of power supplying of individual power supplying circuits.

According to an optional implementation, Fig. 9 is a block diagram showing a power supplying control device for a communication network according to an embodiment of the present disclosure. As shown in Fig. 9, the first adjustment unit 64 includes a first process subunit 92 and a second process subunit 94.
1) The first process subunit 92 is configured to, if it is determined that the absolute value of the difference between the average output voltage of the at least one power supplying circuit and the current power consumption voltage value of the electrical load is greater than the preset threshold and the average output voltage of at least one power supplying circuit is greater than the current power consumption voltage of the electrical load, control corresponding voltage regulator circuit for each of the at least one power supplying circuit to adjust the output voltage of the at least one power supplying circuit to be a first target output voltage according to a first ratio. The first target output voltage is smaller than the average output voltage.

The second process subunit 94 is configured to, if it is determined that the absolute value of the difference between the average output voltage of the at least one power supplying circuit and the current power consumption voltage value of the electrical load is greater than the preset threshold and the average output voltage of at least one power supplying circuit is smaller than the current power consumption voltage of the electrical load, control corresponding voltage regulator circuit for each of the at least one power supplying circuit to adjust the output voltage of the at least one power supplying circuit to be a second target output voltage according to a second ratio. The second target output voltage is greater than the average output voltage.

Through the above steps, the output voltage(s) of the power supplying circuit(s) is(are) dynamically adjusted. In this way, the embodiment can solve the problem in related arts that current equalization control is performed on each power supplying circuit to realize natural equalization of power supplying of individual circuits, which results in poor configurability and flexibility of power supplying. Thus, the embodiment can improve the flexibility of power supplying of individual power supplying circuits.

Embodiments of the present disclosure will be described below with reference to specific examples.

The embodiments of the present invention provide a power supplying control method and device for a communication network. The monitoring module detects and compares circuit data of each power supplying circuit and/or receives control signals from the system, and performs analysis to determine the output circuit data that each circuit should have. According to the circuit data, the output voltage of each power supplying line (or circuit) is adjusted to complete the adjustment of the power supplying ratio and volume of each power supplying line (or circuit). At the same time, the power supplying line (or circuit) can be adjusted by itself, or the power supplying ratio and volume of a certain power supplying line can be adjusted according to the power consumption requirements of the electrical load of the system. In this way, the power supplying status of each power supplying line can be controlled. For example, when a certain power supplying line (or circuit) is powered down and emergency power supplying is performed by using a standby power supply (or power source), the power supplying ratio of the line can be lowered, so as to meet different requirements and adapt to broad application scenarios. Embodiments of the present disclosure will be described with reference to drawings. It should be noted that the embodiments in the present application and the features in the embodiments can be combined with each other without conflict.

In the embodiments of the present invention, the power supplying end refers to a source or an end that provides electrical energy, and the electrical load refers to a load that ultimately uses the electrical energy (i.e., the electrical load is powered, or the electrical load consumes the electrical energy). In the power supplying for a communication network, an interface controller (one end of the controller is connected to a power supplying end and other end of the controller is connected to a monitoring module) is usually required to be disposed between the power supplying end and the electrical load. The interface controller determines whether to receive the current from the power supplying end, and passes the current to the electrical load at the later stage. The communication network may be a power supplying network that can provide direct current, such as Ethernet and telephone networks. The power supplying end, the interface controller, and other loads on the circuit between the power supplying end and the interface controller are collectively referred to as the power supplying circuit.

The power supplying control device for a communication network provided in the embodiment of the present invention is applicable to a case where N power supplying circuits supply power to an electrical load, where N is an integer greater than or equal to 2. The power supplying control device for a communication network in the embodiment of the present invention may be a separate (or stand-alone) device, may also be integrated with the foregoing interface controller on the same device, or be integrated with the later-stage electrical load on the same device, and may also be integrated with the later-stage electrical load and the preceding-stage interface controller on the same device. The embodiments of the present invention will be described below with reference to the accompanying drawings.

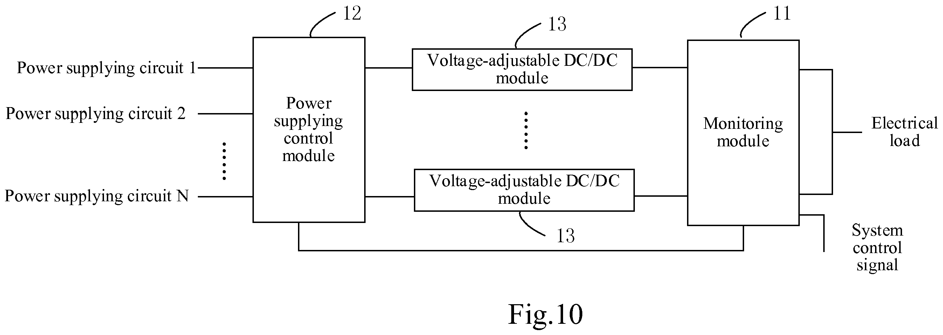

Fig. 10 is a schematic diagram showing a control device for multi-line power supplying for a communication network according to an embodiment of the present disclosure. As shown in Fig. 10, the device includes a monitoring module 11, a power supplying control module 12, and i voltage-adjustable DC/DC modules 13.

The monitoring module 11 is configured to detect the circuit data of each power supplying circuit, perform operations and comparisons on the data of each circuit, and/or receive the control signal from the system, perform analysis to determine the output circuit data that each circuit should have, and transmit the output circuit data that each circuit should have to the power supplying control module 12 and each voltage-adjustable DC/DC module 13.

One end of the power supplying control module 12 is connected to the monitoring module 11, and another end of the power supplying control module 12 is connected to the voltage-adjustable DC/DC module 13. The power supplying control module 12 is configured to perform operations and processes on the circuit data from the monitoring module 11, and according to the circuit data output from the monitoring module, transmit the power supplying control signal to the power supplying control unit so as to control the output voltage of the voltage-adjustable DC-DC module. In this way, the control of the ratios and volumes of the power supplied by the circuits can be controlled. Due to the control of the ratios and volumes of the power supplied by the circuits, the flexibility in the power supplying is improved, the effective load of the single DC-DC module can be improved, and the conversion efficiency of the DC-DC module is also improved.

The voltage-adjustable DC/DC module 13 is connected to the time division control module 12 and is configured to receive the output circuit data that each circuit should have and adjust the output voltage.

Herein, the N input ends of the monitoring module 11 are connected with N power supplying circuits, respectively, and the N output ends of the monitoring module 11 are connected with the N power supplying control modules 12 and the i voltage-adjustable DC/DC modules 13, respectively.

The N input ends of the power supplying control module 12 are connected to the N output ends of the N monitoring modules 11, and the N output ends of the power supplying control module 12 are connected to the input ends of the i voltage-adjustable DC/DC modules 13, respectively.

After the output ends of the N voltage-adjustable DC/DC modules 13 are connected in parallel, the electrical power is supplied to the electrical load at the later stage.

One side of the monitoring module 11 is connected to the interface controller, and the other side of the monitoring module 11 is connected to the power supplying control module 12 and is set after each power supplying circuit (i.e., after each interface controller) to detect the circuit data of each power supplying circuit. The circuit data refers to the circuit data that can be detected, including current data and/or voltage data. The monitoring module 11 performs operations and comparisons on the detected circuit data of each circuit, and/or receives the control signal from the system, performs analysis to determine the output voltage that each circuit should have, and sends the output circuit data that each circuit should have to the power supplying control module 12, so that the power supplying control module 12 performs operations and processes on the circuit data of the monitoring module 11, and transmits the power supplying control signal to the voltage-adjustable DC/DC module 13 to control the output voltage of the voltage-adjustable DC-DC module. In this way, control of the ratios and volumes of the power supplied by the circuits can be realized. The voltage- adjustable DC/DC module 13 adjusts the output voltage of each circuit. The circuits, the output voltage of which are adjusted, are connected in parallel to supply electrical power to the electrical load in the later stage.

Here, the monitoring module 11 is connected in series in the power supplying circuits. The monitoring module 11 may be in the power supplying circuit(s) or outside the power supplying circuit(s). The monitoring module 11 sends data information to the power supplying control module 12 and sends control information to the voltage-adjustable DC/DC module 13.

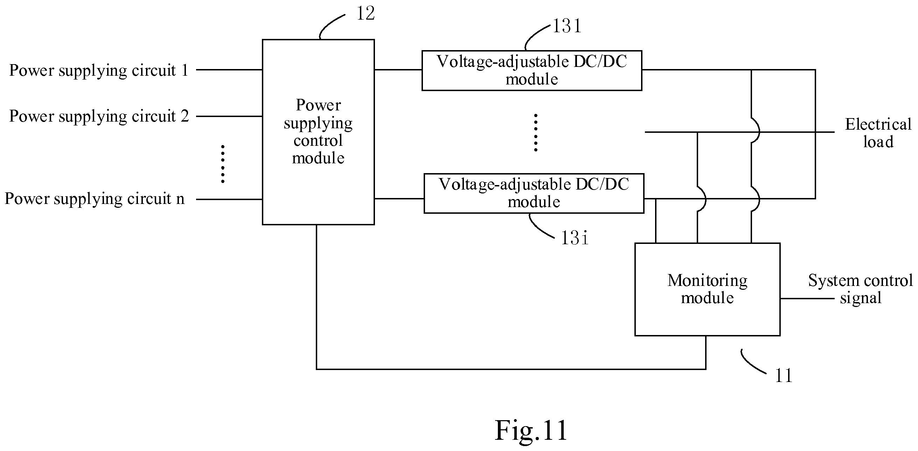

Fig. 11 is a schematic diagram of a power supplying control device for a communication network according to an embodiment of the present disclosure. As shown in Fig. 11, the monitoring module 11 is connected in parallel in the circuit(s). Except this difference, the circuit in Fig. 11 is basically the same as that in Fig. 10, and repeated descriptions are omitted here.

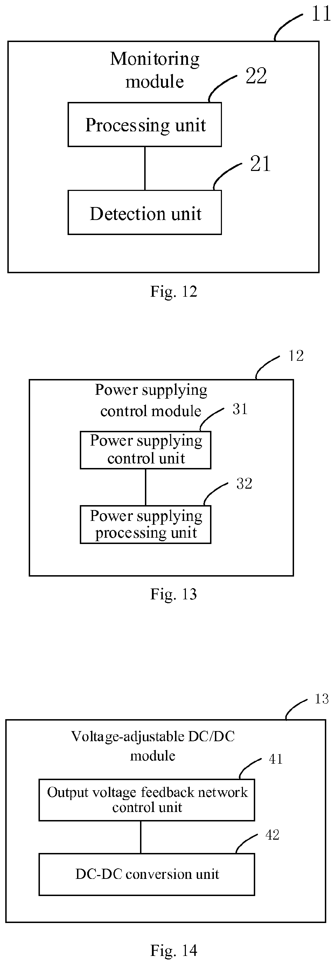

Fig. 12 is a schematic diagram of a monitoring module of a power supplying control device for a communication network according to an embodiment of the present disclosure. As shown in Fig. 12, in the power supplying control device for the communication network, the monitoring module 11 includes a detection unit 21 and a processing unit 22.

The detection unit 22 is configured to detect the circuit data of each power supplying circuit. The processing unit 21 is configured to compare circuit data of each circuit and/or receive the control signal from the system to determine the output circuit data that each circuit should have, and send the output circuit data to each voltage-adjustable DC/DC module 13.

Fig. 13 is a schematic diagram of a power supplying control module of a power supplying control device for a communication network according to an embodiment of the present disclosure. As shown in Fig. 13, in the power supplying control device for the communication network, the power supplying control module 12 includes a power supplying control unit 31 and a power supplying processing unit 32. The power supplying control unit 31 is configured to perform operations and processes on the circuit data sent from the monitoring module and output the control signal to the power supplying control unit. The power supplying processing unit 32 is configured to control the output voltage of the voltage- adjustable DC-DC module to control the ratios and volumes of the power supplying of the circuits.

Fig. 14 is a schematic diagram of a voltage-adjustable DC-DC module of a power supplying control device for a communication network according to an embodiment of the present disclosure. As shown in Fig. 14, in the power supplying control device for the communication network, each voltage-adjustable DC/DC module 13 includes an output voltage feedback network control unit 41 and a DC-DC conversion unit 42.

The output voltage feedback network control unit 41 is configured to receive the output circuit data that the circuit should have, control the on and off of the DC-DC conversion unit 42, and/or adjust the output voltage of the DC-DC conversion unit.

The DC-DC conversion unit 42 is configured to convert the DC input voltage to the DC output voltage in this circuit and adjust the output voltage. The output voltage feedback network control unit 41 may control the DC-DC conversion unit 42 to perform voltage conversion, and may also control the turning-on and turning-off of the output terminal of the DC-DC conversion unit 42.

The power supplying control device for the communication network provided by the above embodiments can track the dynamic changes of the load of each power supplying circuit in real time, and control the output voltage of the voltage-adjustable DC-DC module according to the circuit data output from the monitoring module to complete the control of the proportions and amounts of the power supplying of the circuits. In this way, the flexibility of power supplying is effectively improved, the effective load of a single DC-DC module can be improved, the conversion efficiency of the DC-DC module can be improved, the system heat loss can be reduced, and the dynamic control of the power supplying can be implemented to adapt to a relatively wide range of application scenarios..

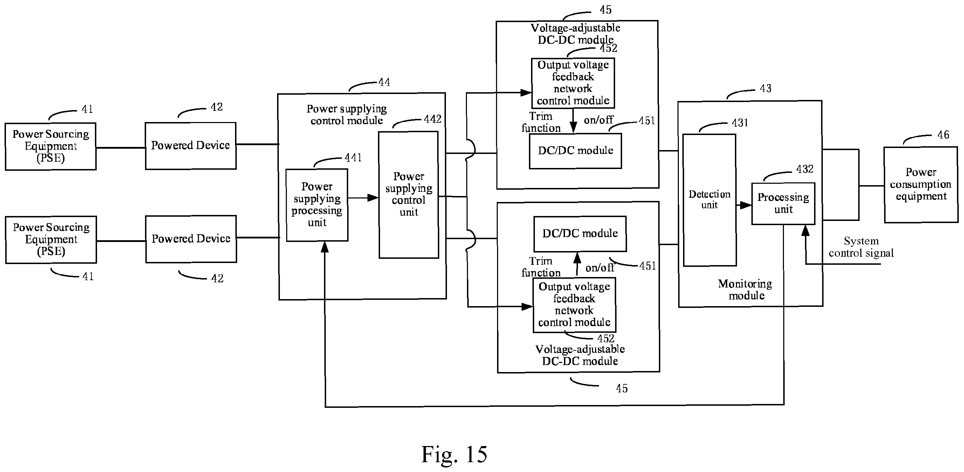

Fig. 15 is a schematic diagram of a power supplying control device for a communication network in an application scenario according to an embodiment of the present disclosure. In this application scenario, the communication network for providing electrical energy is

Ethernet. Two Ethernet Power Sourcing Equipment (PSE) provides electrical power to one electrical load 45. In order to receive the DC current provided by the PSE, two interface controllers are required. The interface controllers are referred to as Powered Devices (PDs) 42 in Power over Ethernet. As shown in Fig. 15, the monitoring module 43 is disposed after each power supplying circuit and is connected in series in the power supplying line. The detection unit 431 is connected to the output ends of the two powered devices 42 to detect the circuit data of each power supplying circuit. The processing unit 432 of the module 43 compares data of the two power supplying circuits and/or receives control signals from the system, analyzes the output voltage that each circuit should have, and transmits the output voltage that each circuit should have to the power supplying control module 44. The power supplying processing unit 441 in the power supplying control module 44 receives the output current and voltage data of the circuit sent by the processing unit 432. After data is calculated and processed, the control signal is output to the power supplying control unit 442, and is set to control the output voltage of the DC-DC conversion unit 451. The output voltage feedback network control module 452 in the voltage-adjustable DC-DC module 45 receives the information regarding the output voltage that each circuit should have sent by the processing unit 432, and/or adjusts the output voltage of the DC-DC conversion unit 451. After the adjustment of the DC-DC conversion unit 451, the voltage at the output end can satisfy (or match) the power supplying requirements. The output ends of the two DC-DC converter units 451 are connected in parallel to power the electric load (power consumption equipment) 46 in later stage. In Fig. 15, the straight line indicates a flowing path of the direct current, and an arrow straight line indicates a flowing path of data information and control information.

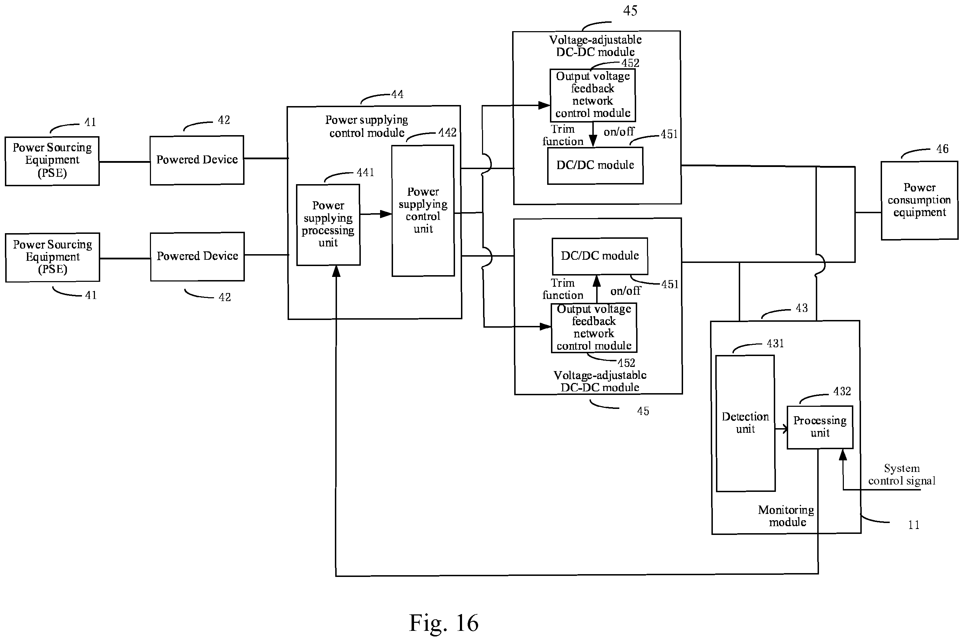

Fig. 16 is a schematic diagram of a power supplying control device for a communication network in another application scenario according to an embodiment of the present disclosure. As shown in Fig. 16, in this application scenario, the monitoring module 11 is connected in parallel in the line. Except this difference, the circuit as shown in Fig. 16 is basically the same as that in Fig. 15, and repeated descriptions are omitted here.

It should be noted that the above modules may be implemented by software or hardware.

For the latter, it may be implemented in the following manner, but it is not limited to this: the above modules are all located in the same processor; or the above modules are respectively located in multiple processors.

### Embodiment 3

An embodiment of the present invention also provides a storage medium. For application scenarios and examples, reference may be made to Embodiment 1 and Embodiment 2 as described above, and repeated descriptions are omitted here. Optionally, in the present embodiment, the storage medium may be configured to store program codes for executing the following steps:
In S1, power supplying data of at least one power supplying circuit in a communication network and current power consumption data of an electrical load in the communication network are obtained. The power supplying data includes at least an output voltage of the at least one power supplying circuit.
In S2, according to the power supplying data and the current power consumption data, adjusting, by a voltage regulator circuit, the at least one output voltage of the at least one power supplying circuit is adjusted according to a predetermined ratio.

Optionally, in this embodiment, the storage medium may include but is not limited to various media for storing program codes, such as a U disk, a Read-Only Memory (ROM), a Random Access Memory (RAM), a mobile hard disk, a magnetic disk or an optical disk. Optionally, in the embodiment, the processor executes the foregoing steps S1 and S2 according to the program code stored in the storage medium.

Optionally, for specific examples, reference may be made to the examples described in the foregoing embodiments and optional embodiments, and repeated descriptions are omitted here.

Obviously, those skilled in the art should understand that each module or step of the present disclosure described above may be implemented by general-purpose computing device(s), which can be concentrated on a single computing device or distributed over a network of multiple computing devices. Optionally, the modules or steps may be implemented with program codes that are executable by the computing device(s) so that they may be stored in the storage device to be executed by the computing device(s). In some cases, the illustrated or described steps may performed in an order different from that described herein, or they may be separately fabricated into individual integrated circuit modules, or some of the modules or steps described herein may be implemented as a single integrated circuit module. Thus, the present disclosure is not limited to any specific combination of hardware and software.

The foregoing descriptions are merely exemplary embodiments of the present disclosure and are not intended to limit the present disclosure. For those skilled in the art, the present disclosure may have various changes and modifications.

## Claims

1. A power supplying control method for a communication network, comprising:
obtaining (S102) power supplying data of at least one power supplying circuit in a communication network and on-going power consumption data of an electrical load in the communication network, wherein the power supplying data comprises at least an output voltage of the at least one power supplying circuit; and
according to the power supplying data and the on-going power consumption data, adjusting (S104), by a voltage regulator circuit, the at least one output voltage of the at least one power supplying circuit according to a predetermined ratio;
wherein the at least one power supplying circuit provides power supply to the electrical load over at least a power supplying line.

2. The method according to claim 1, wherein adjusting (S104), by a voltage regulator circuit, the at least one output voltage of the at least one power supplying circuit according to a predetermined ratio according to the power supplying data and the on-going power consumption data, comprises at least one of:
determining whether an electrical power supplied by the at least one power supplying circuit satisfies an electrical power consumed by the electrical load; and if the electrical power supplied by the at least one power supplying circuit cannot satisfy the electrical power consumed by the electrical load, adjusting the at least one output voltage of the at least one power supplying circuit according to the predetermined ratio by the voltage regulator circuit; or,
according to an indication of a system control signal sent from a power supplying system of the communication network, adjusting the at least one output voltage of the at least one power supplying circuit according to the predetermined ratio by the voltage regulator circuit.

3. The method according to claim 1, before obtaining (S102) power supplying data of at least one power supplying circuit in a communication network and on-going power consumption data of an electrical load in the communication network, the method further comprises:
controlling (S21), by an interface control circuit, the communication network to be connected to a power supplying device corresponding to the at least one power supplying circuit, wherein each connected power supplying device corresponds to one power supplying circuit for powering the electrical load.

4. The method according to claim 1, wherein obtaining (S102) power supplying data of at least one power supplying circuit in a communication network and on-going power consumption data of an electrical load in the communication network comprises:
obtaining (S31) an on-going power consumption voltage of the electrical load which is monitored in the communication network; and
obtaining (S32) an average output voltage of at least one on-going output voltage of the at least one power supplying circuit.

5. The method according to claim 2, wherein determining whether an electrical power supplied by the at least one power supplying circuit satisfies an electrical power consumed by the electrical load, comprises:
determining (S41) whether an absolute value of a difference between an average output voltage of the at least one power supplying circuit and the on-going power consumption voltage value of the electrical load is smaller than or equal to a preset threshold;
if it is determined that the electrical power supplied by the at least one power supplying circuit cannot satisfy the electrical power consumed by the electrical load, adjusting (S42) the at least one output voltage of the at least one power supplying circuit according to the predetermined ratio by the voltage regulator circuit, comprises:
if it is determined that the absolute value of the difference between the average output voltage of the at least one power supplying circuit and the on-going power consumption voltage value of the electrical load is greater than the preset threshold, adjusting the at least one output voltage of the at least one power supplying circuit according to the predetermined ratio by the voltage regulator circuit.

6. The method according to claim 5, wherein adjusting the at least one output voltage of the at least one power supplying circuit according to the predetermined ratio by the voltage regulator circuit, comprises:
if it is determined that the absolute value of the difference between the average output voltage of the at least one power supplying circuit and the on-going power consumption voltage value of the electrical load is greater than the preset threshold and the average output voltage of at least one power supplying circuit is greater than the on-going power consumption voltage of the electrical load, controlling (S51) corresponding voltage regulator circuit for each of the at least one power supplying circuit to adjust the output voltage of the at least one power supplying circuit to be a first target output voltage according to a first ratio, wherein the first target output voltage is smaller than the average output voltage; and
if it is determined that the absolute value of the difference between the average output voltage of the at least one power supplying circuit and the on-going power consumption voltage value of the electrical load is greater than the preset threshold and the average output voltage of at least one power supplying circuit is smaller than the on-going power consumption voltage of the electrical load, controlling (S52) corresponding voltage regulator circuit for each of the at least one power supplying circuit to adjust the output voltage of the at least one power supplying circuit to be a second target output voltage according to a second ratio, wherein the second target output voltage is greater than the average output voltage.

7. A power supplying control device for a communication network, comprising:
an obtaining module (52) configured to obtain power supplying data of at least one power supplying circuit in a communication network and current power consumption data of an electrical load in the communication network, wherein the power supplying data comprises at least an output voltage of the at least one power supplying circuit; and
an adjustment module (54) configured to, according to the power supplying data and the on-going power consumption data, adjust, by a voltage regulator circuit, the at least one output voltage of the at least one power supplying circuit according to a predetermined ratio;
wherein the at least power supplying circuit provides power supply to the electrical load over at least a power supplying line.

8. The device according to claim 7, wherein the adjustment module (54) comprises at least one of:
a determination unit (62) configured to determine whether an electrical power supplied by the at least one power supplying circuit satisfies an electrical power consumed by the electrical load;
a first adjustment unit (64) configured to, if it is determined that the electrical power supplied by the at least one power supplying circuit cannot satisfy the electrical power consumed by the electrical load, adjust the at least one output voltage of the at least one power supplying circuit according to the predetermined ratio by the voltage regulator circuit; or
a second adjustment unit (66) configured to, according to an indication of a system control signal sent from a power supplying system of the communication network, adjust the at least one output voltage of the at least one power supplying circuit according to the predetermined ratio by the voltage regulator circuit.

9. The device according to claim 7, further comprising:
a control module (72) configured to, before the power supplying data of at least one power supplying circuit in a communication network and on-going power consumption data of an electrical load in the communication network are obtained, control by an interface control circuit the communication network to be connected to a power supplying device corresponding to the at least one power supplying circuit, wherein each connected power supplying device corresponds to one power supplying circuit for powering the electrical load.

10. The device according to claim 7, wherein the obtaining module (52) comprises:
a first obtaining unit (82) configured to obtain an on-going power consumption voltage of the electrical load which is monitored in the communication network; and
a second obtaining unit (84) configured to obtain an average output voltage of at least one on-going output voltage of the at least one power supplying circuit.

11. The device according to claim 8, wherein the determination unit (62) is further configured to determine whether an absolute value of a difference between an average output voltage of the at least one power supplying circuit and the on-going power consumption voltage value of the electrical load is smaller than or equal to a preset threshold;
wherein the first adjustment unit (64) is further configured to, if it is determined that the absolute value of the difference between the average output voltage of the at least one power supplying circuit and the current power consumption voltage value of the electrical load is greater than the preset threshold, adjust the at least one output voltage of the at least one power supplying circuit according to the predetermined ratio by the voltage regulator circuit.

12. The device according to claim 11, wherein the first adjustment unit (64) comprises:
a first process subunit (92) configured to, if it is determined that the absolute value of the difference between the average output voltage of the at least one power supplying circuit and the on-going power consumption voltage value of the electrical load is greater than the preset threshold and the average output voltage of at least one power supplying circuit is greater than the on-going power consumption voltage of the electrical load, control corresponding voltage regulator circuit for each of the at least one power supplying circuit to adjust the output voltage of the at least one power supplying circuit to be a first target output voltage according to a first ratio, wherein the first target output voltage is smaller than the average output voltage; and
a second process subunit (94) configured to, if it is determined that the absolute value of the difference between the average output voltage of the at least one power supplying circuit and the on-going power consumption voltage value of the electrical load is greater than the preset threshold and the average output voltage of at least one power supplying circuit is smaller than the current power consumption voltage of the electrical load, control corresponding voltage regulator circuit for each of the at least one power supplying circuit to adjust the output voltage of the at least one power supplying circuit to be a second target output voltage according to a second ratio, wherein the second target output voltage is greater than the average output voltage.

13. A program product having stored therein instructions that, when executed by one or more processors of an apparatus, causes the apparatus to perform the method according to any one of claims 1 to 6.

## Patentansprüche

1. Stromversorgungsregelungsverfahren für ein Kommunikationsnetz, umfassend:
Erhalten (S102) von Stromversorgungsdaten mindestens eines Stromversorgungskreises in einem Kommunikationsnetz sowie von fortlaufenden Stromverbrauchsdaten einer elektrischen Last im Kommunikationsnetz, wobei die Stromversorgungsdaten mindestens eine Ausgangsspannung des mindestens einen Stromversorgungskreises umfassen, und
gemäß den Stromversorgungsdaten und den fortlaufenden Stromverbrauchsdaten: Anpassen (S104) der mindestens einen Ausgangsspannung des mindestens einen Stromversorgungskreises gemäß einem vorgegebenen Verhältnis durch einen Spannungsregelkreis;
wobei der mindestens eine Stromversorgungskreis die elektrische Last über mindestens eine Stromversorgungsleitung mit Strom versorgt.

2. Verfahren nach Anspruch 1, wobei das Anpassen (S104) der mindestens einen Ausgangsspannung des mindestens einen Stromversorgungskreises gemäß einem vorgegebenen Verhältnis durch einen Spannungsregelkreis gemäß den Stromversorgungsdaten und den fortlaufenden Stromverbrauchsdaten einen folgender Schritte umfasst:
Ermitteln, ob ein vom mindestens einen Stromversorgungskreis bereitgestellter Strom einen Stromverbrauch der elektrischen Last befriedigt, und wenn der vom mindestens einen Stromversorgungskreis bereitgestellte Strom den Stromverbrauch der elektrischen Last nicht befriedigen kann: Anpassen der mindestens einen Ausgangsspannung des mindestens einen Stromversorgungskreises gemäß dem vorgegebenen Verhältnis durch den Spannungsregelkreis oder
gemäß einer Angabe eines von einem Stromversorgungssystem des Kommunikationsnetzes gesendeten Systemsteuersignals: Anpassen mindestens einer Ausgangsspannung des mindestens einen Stromversorgungskreises gemäß dem vorgegebenen Verhältnis durch den Spannungsregelkreis.

3. Verfahren nach Anspruch 1 vor dem Erhalten (S102) von Stromversorgungsdaten mindestens eines Stromversorgungskreises in einem Kommunikationsnetz und von fortlaufenden Stromverbrauchsdaten einer elektrischen Last im Kommunikationsnetz umfasst das Verfahren ferner:
Ansteuern (S21) des Kommunikationsnetzes durch eine Schnittstellensteuerschaltung so, dass das Kommunikationsnetz an eine dem mindestens einen Stromversorgungskreis entsprechende Stromversorgungsvorrichtung angeschlossen wird, wobei jede angeschlossene Stromversorgungsvorrichtung einem Stromversorgungskreis zur Versorgung der elektrischen Last entspricht.

4. Verfahren nach Anspruch 1, wobei das Erhalten (S102) von Stromversorgungsdaten mindestens eines Stromversorgungskreises in einem Kommunikationsnetz und von fortlaufenden Stromverbrauchsdaten einer elektrischen Last im Kommunikationsnetz umfasst:
Erhalten (S31) einer fortlaufenden Stromverbrauchsspannung der elektrischen Last, die im Kommunikationsnetzwerk überwacht wird, und
Erhalten (S32) einer durchschnittlichen Ausgangsspannung mindestens einer fortlaufenden Ausgangsspannung des mindestens einen Stromversorgungskreises.

5. Verfahren nach Anspruch 2, wobei das Ermitteln, ob ein vom mindestens einen Stromversorgungskreis bereitgestellter Strom einen Stromverbrauch der elektrischen Last befriedigt, umfasst:
Ermitteln (S41), ob ein Betrag eines Unterschieds zwischen einer durchschnittlichen Ausgangspannung des mindestens einen Stromversorgungskreises und dem fortlaufenden Stromversorgungsspannungswert der elektrischen Last kleiner oder gleich einem vorgegebenen Schwellenwert ist;
wenn festgestellt wird, dass der vom mindestens einen Stromversorgungskreis bereitgestellte Strom den Stromverbrauch der elektrischen Last nicht befriedigen kann: das Anpassen (S42) der mindestens einen Ausgangsspannung des mindestens einen Stromversorgungskreises gemäß dem vorgegebenen Verhältnis durch den Spannungsregelkreis umfasst:
wenn festgestellt wird, dass der Betrag des Unterschieds zwischen der durchschnittlichen Ausgangsspannung des mindestens einen Stromversorgungskreises und dem fortlaufenden Stromverbrauchsspannungswert der elektrischen Last den vorgegebenen Schwellenwert übersteigt: Anpassen der mindestens einen Ausgangsspannung des mindestens einen Stromversorgungskreises gemäß dem vorgegebenen Verhältnis durch den Spannungsregelkreis.

6. Verfahren nach Anspruch 5, wobei das Anpassen der mindestens einen Ausgangsspannung des mindestens einen Stromversorgungskreises gemäß dem vorgegebenen Verhältnis durch den Spannungsregelkreis umfasst:
wenn festgestellt wird, dass der Betrag des Unterschieds zwischen der durchschnittlichen Ausgangsspannung des mindestens einen Stromversorgungskreises und dem fortlaufenden Stromverbrauchsspannungswert der elektrischen Last den vorgegebenen Schwellenwert übersteigt und die durchschnittliche Ausgangsspannung mindestens eines Stromversorgungskreises die fortlaufende Stromverbrauchsspannung der elektrischen Last übersteigt: Ansteuern (S51) eines entsprechenden Spannungsregelkreises jedes der minestens einen Stromversorgungskreises derart, dass dieser die Ausgangsspannung des mindestens einen Stromversorgungskreises gemäß einem ersten Verhältnis auf eine erste Sollausgangsspannung anpasst, wobei die erste Sollausgangsspannung kleiner ist als die durchschnittliche Ausgangsspannung, und
wenn festgestellt wird, dass der Betrag des Unterschieds zwischen der durchschnittlichen Ausgangsspannung des mindestens einen Stromversorgungskreises und dem fortlaufenden Stromverbrauchsspannungswert der elektrischen Last den vorgegebenen Schwellenwert übersteigt und die durchschnittliche Ausgangsspannung mindestens eines Stromversorgungskreises kleiner ist als die fortlaufende Stromverbrauchsspannung der elektrischen Last: Ansteuern (S52) eines entsprechenden Spannungsregelkreises jedes der minestens einen Stromversorgungskreises derart, dass dieser die Ausgangsspannung des mindestens einen Stromversorgungskreises gemäß einem zweiten Verhältnis auf eine zweite Sollausgangsspannung anpasst, wobei die zweite Sollausgangsspannung größer ist als die durchschnittliche Ausgangsspannung.

7. Stromversorgungsregler für ein Kommunikationsnetz, umfassend:
ein Einholungsmodul (52), das konfiguriert ist zum Erhalten von Stromversorgungsdaten mindestens eines Stromversorgungskreises in einem Kommunikationsnetz sowie von aktuellen Stromverbrauchsdaten einer elektrischen Last im Kommunikationsnetz, wobei die Stromversorgungsdaten mindestens eine Ausgangsspannung des mindestens einen Stromversorgungskreises umfassen, und
ein Anpassungsmodul (54), das konfiguriert ist zum Anpassen der mindestens einen Ausgangsspannung des mindestens einen Stromversorgungskreises gemäß einem vorgegebenen Verhältnis durch einen Spannungsregelkreis gemäß den Stromversorgungsdaten und den fortlaufenden Stromverbrauchsdaten;
wobei der mindestens eine Stromversorgungskreis die elektrische Last über mindestens eine Stromversorgungsleitung mit Strom versorgt.

8. Vorrichtung nach Anspruch 7, wobei das Anpassungsmodul (54) mindestens eines folgender Elemente umfasst:
eine Ermittlungseinheit (62), die konfiguriert ist zum Ermitteln, ob ein vom mindestens einen Stromversorgungskreis bereitgestellter Strom einen Stromverbrauch der elektrischen Last befriedigt;
eine erste Anpassungseinheit (64), die zum Anpassen der mindestens einen Ausgangsspannung des mindestens einen Stromversorgungskreises gemäß dem vorgegebenen Verhältnis durch den Spannungsregelkreis, wenn festgestellt wird, dass der vom mindestens einen Stromversorgungskreis bereitgestellte Strom den Stromverbrauch der elektrischen Last nicht befriedigen kann; oder
eine zweite Anpassungseinheit (66), die konfiguriert ist zum Anpassen mindestens einer Ausgangsspannung des mindestens einen Stromversorgungskreises gemäß dem vorgegebenen Verhältnis durch den Spannungsregelkreis gemäß einer Angabe eines von einem Stromversorgungssystem des Kommunikationsnetzes gesendeten Systemsteuersignals.

9. Vorrichtung nach Anspruch 7, ferner umfassend:
ein Steuerungsmodul (72), das konfiguriert ist zum Ansteuern des Kommunikationsnetzes durch eine Schnittstellensteuerschaltung so, dass das Kommunikationsnetz an eine dem mindestens einen Stromversorgungskreis entsprechende Stromversorgungsvorrichtung angeschlossen wird, wobei jede angeschlossene Stromversorgungsvorrichtung einem Stromversorgungskreis zur Versorgung der elektrischen Last entspricht vor dem Erhalten von Stromversorgungsdaten mindestens eines Stromversorgungskreises in einem Kommunikationsnetz und von fortlaufenden Stromverbrauchsdaten einer elektrischen Last im Kommunikationsnetz.

10. Vorrichtung nach Anspruch 7, wobei das Einholungsmodul (52) umfasst:
eine erste Einhlungseinheit (82), die konfiguriert ist zum Erhalten einer fortlaufenden Stromverbrauchsspannung der elektrischen Last, die im Kommunikationsnetzwerk überwacht wird, und
eine zweite Einholungseinheit (84), die konfiguriert ist zum Erhalten einer durchschnittlichen Ausgangsspannung mindestens einer fortlaufenden Ausgangsspannung des mindestens einen Stromversorgungskreises.

11. Vorrichtung nach Anspruch 8, wobei die Ermittlungseinheit (62) ferner konfiguriert ist zum Ermitteln, ob ein Betrag eines Unterschieds zwischen einer durchschnittlichen Ausgangspannung des mindestens einen Stromversorgungskreises und dem fortlaufenden Stromversorgungsspannungswert der elektrischen Last kleiner oder gleich einem vorgegebenen Schwellenwert ist;
wobei die erste Anpassungseinheit (64) ferner konfiguriert ist zum Anpassen der mindestens einen Ausgangsspannung des mindestens einen Stromversorgungskreises gemäß dem vorgegebenen Verhältnis durch den Spannungsregelkreis, wenn festgestellt wird, dass der Betrag des Unterschieds zwischen der durchschnittlichen Ausgangsspannung des mindestens einen Stromversorgungskreises und dem aktuellen Stromverbrauchsspannungswert der elektrischen Last den vorgegebenen Schwellenwert übersteigt.

12. Vorrichtung nach Anspruch 11, wobei das die erste Anpassungseinheit (64) umfasst:
eine erste Prozessuntereinheit (92) die konfiguriert ist zum Ansteuern eines entsprechenden Spannungsregelkreises jedes der minestens einen Stromversorgungskreises derart, dass dieser die Ausgangsspannung des mindestens einen Stromversorgungskreises gemäß einem ersten Verhältnis auf eine erste Sollausgangsspannung anpasst, wobei die erste Sollausgangsspannung kleiner ist als die durchschnittliche Ausgangsspannung, wenn festgestellt wird, dass der Betrag des Unterschieds zwischen der durchschnittlichen Ausgangsspannung des mindestens einen Stromversorgungskreises und dem fortlaufenden Stromverbrauchsspannungswert der elektrischen Last den vorgegebenen Schwellenwert übersteigt und die durchschnittliche Ausgangsspannung mindestens eines Stromversorgungskreises die fortlaufende Stromverbrauchsspannung der elektrischen Last übersteigt, und
eine zweite Prozessuntereinheit (94), die konfiguriert ist zum Ansteuern eines entsprechenden Spannungsregelkreises jedes der minestens einen Stromversorgungskreises derart, dass dieser die Ausgangsspannung mindestens eines Stromversorgungskreises gemäß einem zweiten Verhältnis auf eine zweite Sollausgangsspannung anpasst, wobei die zweite Sollausgangsspannung größer ist als die durchschnittliche Ausgangsspannung, wenn festgestellt wird, dass der Betrag des Unterschieds zwischen der durchschnittlichen Ausgangsspannung des mindestens einen Stromversorgungskreises und dem fortlaufenden Stromverbrauchsspannungswert der elektrischen Last den vorgegebenen Schwellenwert übersteigt und die durchschnittliche Ausgangsspannung mindestens eines Stromversorgungskreises kleiner ist als die aktuelle Stromverbrauchsspannung der elektrischen Last.

13. Programmprodukt, auf dem Befehle gespeichert sind, die bei Ausführung durch mindestens einen Prozessor einer Vorrichtung diese zur Ausführung des Verfahrens nach einem der Ansprüche 1 - 6 veranlasst.

## Revendications

1. Procédé de commande d'alimentation électrique d'un réseau de communication, le procédé comprenant les étapes ci-dessous consistant à :
obtenir (S102) des données d'alimentation électrique d'au moins un circuit d'alimentation électrique dans un réseau de communication, et des données de consommation d'énergie en cours d'une charge électrique dans le réseau de communication, dans lequel les données d'alimentation électrique comprennent au moins une tension de sortie dudit au moins un circuit d'alimentation électrique ; et
selon les données d'alimentation électrique et les données de consommation d'énergie en cours, ajuster (S104), par le biais d'un circuit régulateur de tension, ladite au moins une tension de sortie dudit au moins un circuit d'alimentation électrique selon un rapport prédéterminé ;
dans lequel ledit au moins un circuit d'alimentation électrique fournit une alimentation électrique à la charge électrique, sur au moins une ligne d'alimentation électrique.

2. Procédé selon la revendication 1, dans lequel l'étape d'ajustement (S104), par le biais d'un circuit régulateur de tension, de ladite au moins une tension de sortie dudit au moins un circuit d'alimentation électrique, selon un rapport prédéterminé, conformément aux données d'alimentation électrique et aux données de consommation d'énergie en cours, comprend au moins l'une des étapes ci-dessous consistant à :
déterminer si une puissance électrique fournie par ledit au moins un circuit d'alimentation électrique satisfait une puissance électrique consommée par la charge électrique ; et si la puissance électrique fournie par ledit au moins un circuit d'alimentation électrique ne peut pas satisfaire la puissance électrique consommée par la charge électrique, ajuster ladite au moins une tension de sortie dudit au moins un circuit d'alimentation électrique selon le rapport prédéterminé, par le biais du circuit régulateur de tension ; ou
selon une indication d'un signal de commande de système envoyé à partir d'un système d'alimentation électrique du réseau de communication, ajuster la tension de sortie dudit au moins un circuit d'alimentation électrique conformément au rapport prédéterminé, par le biais du circuit régulateur de tension.

3. Procédé selon la revendication 1, dans lequel, avant l'étape d'obtention (S102) de données d'alimentation électrique d'au moins un circuit d'alimentation électrique dans un réseau de communication, et de données de consommation d'énergie en cours d'une charge électrique dans le réseau de communication, le procédé comprend en outre les étapes ci-dessous consistant à :
commander (S21), par le biais d'un circuit de commande d'interface, le réseau de communication devant être connecté à un dispositif d'alimentation électrique correspondant audit au moins un circuit d'alimentation électrique, dans lequel chaque dispositif d'alimentation électrique connecté correspond à un circuit d'alimentation électrique destiné à alimenter la charge électrique.

4. Procédé selon la revendication 1, dans lequel l'étape d'obtention (S102) de données d'alimentation électrique d'au moins un circuit d'alimentation électrique dans un réseau de communication, et de données de consommation d'énergie en cours d'une charge électrique dans le réseau de communication, comprend les étapes ci-dessous consistant à :
obtenir (S31) une tension de consommation d'énergie en cours de la charge électrique qui est surveillée dans le réseau de communication ; et
obtenir (S32) une tension de sortie moyenne d'au moins une tension de sortie en cours dudit au moins un circuit d'alimentation électrique.

5. Procédé selon la revendication 2, dans lequel l'étape consistant à déterminer qu'une puissance électrique fournie par ledit au moins un circuit d'alimentation électrique satisfait une puissance électrique consommée par la charge électrique, comprend l'étape ci-dessous consistant à :
déterminer (S41) si une valeur absolue d'une différence entre une tension de sortie moyenne dudit au moins un circuit d'alimentation électrique et la valeur de tension de consommation d'énergie en cours de la charge électrique est inférieure ou égale à un seuil prédéfini ;
dans lequel, s'il est déterminé que la puissance électrique fournie par ledit au moins un circuit d'alimentation électrique ne peut pas satisfaire la puissance électrique consommée par la charge électrique, l'étape consistant à ajuster (S42) ladite au moins une tension de sortie dudit au moins un circuit d'alimentation électrique conformément au rapport prédéterminé, par le biais du circuit régulateur de tension, comprend l'étape ci-dessous consistant à :
s'il est déterminé que la valeur absolue de la différence entre la tension de sortie moyenne dudit au moins un circuit d'alimentation électrique et la valeur de tension de consommation d'énergie en cours de la charge électrique est supérieure au seuil prédéfini, ajuster ladite au moins une tension de sortie dudit au moins un circuit d'alimentation électrique selon le rapport prédéterminé, par le biais du circuit régulateur de tension.

6. Procédé selon la revendication 5, dans lequel l'étape d'ajustement de ladite au moins une tension de sortie dudit au moins un circuit d'alimentation électrique selon le rapport prédéterminé, par le biais du circuit régulateur de tension, comprend les étapes ci-dessous consistant à :
s'il est déterminé que la valeur absolue de la différence entre la tension de sortie moyenne dudit au moins un circuit d'alimentation électrique et la valeur de tension de consommation d'énergie en cours de la charge électrique est supérieure au seuil prédéfini, et que la tension de sortie moyenne dudit au moins un circuit d'alimentation électrique est supérieure à la tension de consommation d'énergie en cours de la charge électrique, commander (S51), au circuit régulateur de tension correspondant, pour chaque circuit dudit au moins un circuit d'alimentation électrique, d'ajuster la tension de sortie dudit au moins un circuit d'alimentation électrique afin qu'elle corresponde à une première tension de sortie cible selon un premier rapport, dans lequel la première tension de sortie cible est inférieure à la tension de sortie moyenne ; et
s'il est déterminé que la valeur absolue de la différence entre la tension de sortie moyenne dudit au moins un circuit d'alimentation électrique et la valeur de tension de consommation d'énergie en cours de la charge électrique est supérieure au seuil prédéfini, et que la tension de sortie moyenne dudit au moins un circuit d'alimentation électrique est inférieure à la tension de consommation d'énergie en cours de la charge électrique, commander (S52), au circuit régulateur de tension correspondant, pour chaque circuit dudit au moins un circuit d'alimentation électrique, d'ajuster la tension de sortie dudit au moins un circuit d'alimentation électrique afin qu'elle corresponde à une seconde tension de sortie cible selon un second rapport, dans lequel la seconde tension de sortie cible est supérieure à la tension de sortie moyenne.

7. Dispositif de commande d'alimentation électrique pour un réseau de communication, comprenant :
un module d'obtention (52) configuré de manière à obtenir des données d'alimentation électrique d'au moins un circuit d'alimentation électrique dans un réseau de communication, et des données de consommation d'énergie en cours d'une charge électrique dans le réseau de communication, dans lequel les données d'alimentation électrique comprennent au moins une tension de sortie dudit au moins un circuit d'alimentation électrique ; et
un module d'ajustement (54) configuré de manière à, selon les données d'alimentation électrique et les données de consommation d'énergie en cours, ajuster, par le biais d'un circuit régulateur de tension, ladite au moins une tension de sortie dudit au moins un circuit d'alimentation électrique selon un rapport prédéterminé ;
dans lequel ledit au moins un circuit d'alimentation électrique fournit une alimentation électrique à la charge électrique, sur au moins une ligne d'alimentation électrique.

8. Dispositif selon la revendication 7, dans lequel le module d'ajustement (54) comprend au moins l'une des unités ci-dessous :
une unité de détermination (62) configurée de manière à déterminer si une puissance électrique fournie par ledit au moins un circuit d'alimentation électrique satisfait une puissance électrique consommée par la charge électrique ;
une première unité d'ajustement (64) configurée de manière à, s'il est déterminé que la puissance électrique fournie par ledit au moins un circuit d'alimentation électrique ne peut pas satisfaire la puissance électrique consommée par la charge électrique, ajuster ladite au moins une tension de sortie dudit au moins un circuit d'alimentation électrique selon le rapport prédéterminé, par le biais du circuit régulateur de tension ; ou
une seconde unité d'ajustement (66) configurée de manière à, selon une indication d'un signal de commande de système envoyé à partir d'un système d'alimentation électrique du réseau de communication, ajuster ladite au moins une tension de sortie dudit au moins un circuit d'alimentation électrique conformément au rapport prédéterminé, par le biais du circuit régulateur de tension.

9. Dispositif selon la revendication 7, comprenant en outre :
un module de commande (72) configuré de manière à, avant l'obtention des données d'alimentation électrique d'au moins un circuit d'alimentation électrique dans un réseau de communication, et des données de consommation d'énergie en cours d'une charge électrique dans le réseau de communication, commander, par le biais d'un circuit de commande d'interface, le réseau de communication devant être connecté à un dispositif d'alimentation électrique correspondant audit au moins un circuit d'alimentation électrique, dans lequel chaque dispositif d'alimentation électrique connecté correspond à un circuit d'alimentation électrique destiné à alimenter la charge électrique.

10. Dispositif selon la revendication 7, dans lequel le module d'obtention (52) comprend :
une première unité d'obtention (82) configurée de manière à obtenir une tension de consommation d'énergie en cours de la charge électrique qui est surveillée dans le réseau de communication ; et
une seconde unité d'obtention (84) configurée de manière à obtenir une tension de sortie moyenne d'au moins une tension de sortie en cours dudit au moins un circuit d'alimentation électrique.

11. Dispositif selon la revendication 8, dans lequel l'unité de détermination (62) est en outre configurée de manière à déterminer si une valeur absolue d'une différence entre une tension de sortie moyenne dudit au moins un circuit d'alimentation électrique et la valeur de tension de consommation d'énergie en cours de la charge électrique est inférieure ou égale à un seuil prédéfini ;
dans lequel la première unité d'ajustement (64) est en outre configurée de manière à, s'il est déterminé que la valeur absolue de la différence entre la tension de sortie moyenne dudit au moins un circuit d'alimentation électrique et la valeur de tension de consommation d'énergie en cours de la charge électrique est supérieure au seuil prédéfini, ajuster ladite au moins une tension de sortie dudit au moins un circuit d'alimentation électrique selon le rapport prédéterminé, par le biais du circuit régulateur de tension.

12. Dispositif selon la revendication 11, dans lequel la première unité d'ajustement (64) comprend :
une première sous-unité de traitement (92) configurée de manière à, s'il est déterminé que la valeur absolue de la différence entre la tension de sortie moyenne dudit au moins un circuit d'alimentation électrique et la valeur de tension de consommation d'énergie en cours de la charge électrique est supérieure au seuil prédéfini, et que la tension de sortie moyenne dudit au moins un circuit d'alimentation électrique est supérieure à la tension de consommation d'énergie en cours de la charge électrique, commander, au circuit régulateur de tension correspondant, pour chaque circuit dudit au moins un circuit d'alimentation électrique, d'ajuster la tension de sortie dudit au moins un circuit d'alimentation électrique afin qu'elle corresponde à une première tension de sortie cible selon un premier rapport, dans lequel la première tension de sortie cible est inférieure à la tension de sortie moyenne ; et
une seconde sous-unité de traitement (94) configurée de manière à, s'il est déterminé que la valeur absolue de la différence entre la tension de sortie moyenne dudit au moins un circuit d'alimentation électrique et la valeur de tension de consommation d'énergie en cours de la charge électrique est supérieure au seuil prédéfini, et que la tension de sortie moyenne dudit au moins un circuit d'alimentation électrique est inférieure à la tension de consommation d'énergie en cours de la charge électrique, commander, au circuit régulateur de tension correspondant, pour chaque circuit dudit au moins un circuit d'alimentation électrique, d'ajuster la tension de sortie dudit au moins un circuit d'alimentation électrique afin qu'elle corresponde à une seconde tension de sortie cible selon un second rapport, dans lequel la seconde tension de sortie cible est supérieure à la tension de sortie moyenne.

13. Produit-programme dans lequel sont stockées des instructions qui, lorsqu'elles sont exécutées par un ou plusieurs processeurs d'un appareil, amènent l'appareil à mettre en œuvre le procédé selon l'une quelconque des revendications 1 à 6.
